(19)

Europäisches
Patentamt
European
Patent Office
Office européen
des brevets

(11) **EP 4 027 277 A1**

(12) **EUROPEAN PATENT APPLICATION**

(43) Date of publication:
**13.07.2022 Bulletin 2022/28**

(21) Application number: **21382004.6**

(22) Date of filing: **11.01.2021**

(51) International Patent Classification (IPC):
**G06N 20/00** *(2019.01)*      **G06N 5/04** *(2006.01)*

(52) Cooperative Patent Classification (CPC):
**G06N 20/00; G06N 5/046**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Fundación Tecnalia Research & Innovation**
  **20009 Donostia-San Sebastian, Guipuzcoa (ES)**
• **Universidad del Pais Vasco - Euskal Herriko Unibertsitatea (UPV/EHU)**
  **48940 Leioa (ES)**

(72) Inventors:
• **López Lobo, Jesús**
  **20009 Sebastián - Guipúzcoa (ES)**
• **Del Ser Lorente, Javier**
  **20009 Sebastián - Guipúzcoa (ES)**
• **Bilbao Marón, Miren Nekane**
  **48940 Leioa (ES)**

(74) Representative: **Balder IP Law, S.L.**
  **Paseo de la Castellana 93**
  **5ª planta**
  **28046 Madrid (ES)**

(54) **METHOD, SYSTEM AND COMPUTER PROGRAM PRODUCT FOR DRIFT DETECTION IN A DATA STREAM**

(57)      A computer-implemented method for making a prediction and detecting drift in a data stream, comprising: providing a processing means (120) with at least one stream of data comprising a sequence of data instances $D_{0,t} = d_0, ..., d_t$ representing a service demand in at least one point in a network (10), wherein $d_t = (x_t, y_i)$ is a data instance captured at time t, $x_t$ is a feature vector and $y_t$ its label, wherein label $y_t$ denotes whether there is an increase or decrease in the service demand; at the processing means (120) having an embedded cellular automaton (121) defined by the following parameters: (i) lattice formed by a grid of cells, the grid having grid size G, the cells in the lattice being filled with the data instances of the stream of data $D_{0,t}$; (ii) states assigned to said cells, wherein said states assigned to each cell indicate either an increase or a decrease in the service demand as denoted by the labels $y_i$; (iii) a neighbourhood defined by a radius $r$, and (iv) at least one local rule; wherein the neighbourhood is used to evaluate the at least one local rule: initializing the grid using a set of P preparatory data instances $[(X_t, y_t)]_{t=0}^{t=P-1}$; every time a new data instance $d_t$ of a data stream $[(X_t, y_t)]_{t=P}^{t=\infty}$ arrives: predicting the label $y_t$ of the incoming instance, using said label for updating the state of the corresponding cell; checking whether a mutation of a cell state has occurred by comparing the previous state of the cell with the label of the incoming instance and, if a mutation is detected in the cell state: checking the state of the neighbouring cells in a certain radius $r_{mut}$ in a specific period of time, and if the number of neighbouring mutants exceeds a threshold of allowed mutants, determining that a drift has occurred.

FIG. 3

EP 4 027 277 A1

**Description**

**TECHNICAL FIELD**

The present invention relates to the field of stream processing. More particularly, it relates to methods and systems for continuously processing streams of data objects applying Data Stream Mining techniques.

**STATE OF THE ART**

Data Stream Mining (DSM) techniques are focused on extracting patterns from continuous (potentially infinite) and fast data. A data stream is the basis of machine learning techniques for this particular kind of data, which is composed of an ordered sequence of instances that arrive one by one or in batches over time. The algorithmic challenge emerges from the fact that data streams are fast and large (frequently infinite) and there is a need for extracting information in real time from them. Depending on the constraints imposed by the application scenario at hand, such instances can be read only once or a reduced number of times, using limited computing and memory resources. Consequently, approximate solutions implying limited resources (e.g. time and memory) must be used. These constraints require an incremental learning (or one-pass learning) where past data cannot be stored for batch training in future time steps. Due to these challenging conditions under which learning must be done, DSM has acquired a notable relevance in recent years, mostly propelled by the advent of Big Data technologies and data-intensive practical use cases. The Internet of Things paradigm (IoT) deserves special attention, where a huge quantity of data is continuously generated in real time by sensors and actuators connected by networks to computing systems. IoT uses stream learning methods to deal with this real-time information in several applications, such as water monitoring networks, smart energy grids or industrial prognosis, among others.

In such contexts, data stream sources are often subject to non-stationary phenomena, which may provoke a change in the distribution of the data instances (and/or their annotation). This phenomenon is often referred to as concept drift (G. I. Webb et al, 2016, Characterizing concept drift. Data Mining and Knowledge Discovery 30, 4 (2016), 964-994). These changes cause that predictive models trained over data streams become eventually obsolete, not adapting suitably to the new distribution (concept). In Machine Learning models for classification or regression, failure to adapt the model would result in a degradation of the quality of the model output, as severe as drastic is the change in concept. This raises the need to adapt, because otherwise the model begins to give bad predictions and ceases to be useful for the practical case in question. The complexity of overcoming this issue, and its prevalence over many real scenarios, makes concept drift detection and adaptation acknowledged challenges in DSM, as reported by Jie Lu et al in Learning under concept drift: A review. IEEE Transactions on Knowledge and Data Engineering (2018).

The complexity in the concept drift phenomenon manifests when researchers try to characterize it, as reported for example in the already mentioned publication by G. I. Webb et al. Indeed, there are many different types of concept drifts, characterized by e.g. the speed at which the change occurs, or the severity of the change (i.e. whether the previous and the new concept are similar to or different than each other). Consequently, drift detection is a key factor for those active strategies that require triggering mechanisms for drift adaptation (Hanqing Hu et al, 2019. No Free Lunch Theorem for concept drift detection in streaming data classification: A review. Wiley Interdisciplinary Reviews: Data Mining and Knowledge Discovery (2019), e1327). A drift detector estimates the time instants at which changes occur over the stream, so that when a change is detected, an adaptation mechanism is applied to a base learner (a learning algorithm that underlies a Machine Learning (ML) model and that allows the ML model to incrementally update its knowledge) so as to avoid a degradation of its predictive performance. The design of a concept drift detector with high performance is not trivial, yet it is crucial to achieve more reliable DSM models. For example, in No Free Lunch theorem in this field (Hanqing Hu et al, 2019) concludes that there is no one detector universally better than the others for all possible concept drifts. In fact, a general-purpose strategy for concept drift detection, handling and recovery still remains as an open research avenue, as foretold by the fulfillment of the No Free Lunch theorem in this field (Hanqing Hu et al, 2019). This difficulty to have a universal best approach becomes evident in the most recent drift detectors comparative performed by Roberto Souto Maior Barros et al, 2018. A large-scale comparison of concept drift detectors. Information Sciences 451 (2018), 348-370. Analyzing its mean rank of methods, it is observed that there is not a method with best metrics, or even showing the best performance in the majority of them.

In this regard, the design objective is to develop techniques that detect all existing drifts in the stream with low latency and as few false alarms (events detected as concept drift which in fact are not) and missed detections (events not detected as concept drift which in fact are) as possible. Thus, the most suitable drift detector should be chosen depending on the characteristics of the DSM problem under study, giving more emphasis to some metrics than others. Regarding the detection metrics, drift detectors that are able to show a good classification performance while minimizing the distance of the true positive detections are usually appreciated. Besides, fast adaptation mechanisms are also needed. However, many of them require an unknown amount of instances (Zhe Yang et al, 2019. A novel concept drift detection method for incremental learning in nonstationary environments. IEEE transactions on neural networks and learning systems (2019). Finally, some drift detectors rely on a combined approach: while a base learner performs certain actions, such as classification, regression and clustering, requiring online learning, a separate drift detection algorithm analyzes its performance i.e. errors or accuracy towards deciding whether drift has occurred. This combination obliges to maintain two different techniques and to find their proper parameters values. An example of this kind of drift detectors is reported by Jesús L. Lobo et al in LUNAR: Cellular Automata for Drifting Data Streams, Information Sciences, Volume 543, 8 January 2021, Pages 467-487. In this document, concept drift is addressed with an approach based on stable-reactive learning. In particular, two learners are used: a stable learner and a reactive learner. The stable learner is used for prediction, while the reactive one is used to detect possible concept drifts. While the concept remains unchanged, the stable learner provides a better performance than the reactive learner. A counter is arranged to count the number of times within a window that the reactive learner predicts correctly the stream data and the stable learner produces a bad prediction. If the proportion of these occurrences surpasses a threshold, a concept change is assumed to have occurred and the stable learner is replaced with the reactive one. This approach requires high computational processing and storing resources.

Therefore, there is an increasing interest in developing stream learning methods applicable to data streams, which obtain the maximum performance score, using minimum time and low memory at the same time. In sum, there is a latent necessity of stream learning approaches that handle concept drift in data streams.

**DESCRIPTION OF THE INVENTION**

The present invention provides a computer-implemented method and system for drift detection in a data stream, which intend to solve the shortcomings of prior-art methods and systems therefor.

The method herein described makes a prediction in a data stream, detects drift in the data stream and adapts to the detected drift, providing good predictive performance after a drift has occurred. Non-limiting examples of stream data sources undergoing concept drift, and to which the method of the invention can be applied, include computer network traffic data, wireless sensor data, phone conversations data, social media data, marketing data, ATM transactions data, web searches data and electricity, gas and water consumption traces, among many others. For example, in order to perform a prediction and detect concept drift, a network of sensors may be used. Different kinds of sensors may be used, depending on the application. For example, water stream flow sensors capable of measuring the volume of water per time unit may be disposed at different stages in a water supply system. Or power consumption sensors capable of measuring the domestic or industrial electricity consumption may be disposed at different stages in an electricity supply network. Or IoT sensors collecting data associated to any industrial activity. Other applications may not require a network of sensors. Alternatively, a stream of objects may represent page requests received by a web site or microblog messages posted by users of, for example, a social network. In all these scenarios data continuously flow over time, and are fed to online learning models for a manifold of purposes, from water leakage detection, energy consumption prediction or sentiment analysis.

The proposed method makes a prediction, detects drift and adapts to the detected drift using a model based on a cellular automaton (CA). A single CA is used. In other words, abrupt and gradual concept drifts are identified by a cellular automaton having a single learner. Cellular automata are chosen due to their capability to be computationally complete and to their parallel nature, which allows special-purposed hardware to be implemented. Besides, cellular automata as stream learning algorithm can be embarked in miniaturized devices running on low-power hardware with limited storage, for example in sensor networks or IoT devices. In the method of the invention, concept drift detection is performed within the data stream mining (DSM) process performed by the cellular automaton.

A stream of data is a sequence of data objects which is not limited to a predetermined number of data objects or to a predetermined rate of arrival of data objects. For example, a stream of objects may represent telemetry events captured by sensors including wireless sensor data, computer network traffic, phone conversations, social media, marketing data, ATM transactions, web searches and electricity and water consumption traces, among many others.

A CA may be seen as a mathematical model for a dynamic system that evolves at discrete steps. CAs are suitable to model systems which can be described as a massive collection of simple objects which interact locally with each other. By observing the evolution of the information contained in the automata, an action can be performed, if necessary, on one or more points in the network or system in which data streams are collected. As a matter of example, such actions may be redirecting computer network traffic through alternative routes, denying access to certain users (for example access to a communications network, a web page or a social network), resizing a communications network or repairing a device, such as an ATM machine, a sensor, a pipe or other devices of a network supply. The predicted magnitude depends on the application: for example, whether there is water loss at a point in a water distribution network or not, whether a user's energy consumption will go up or down in a given time horizon, or whether an unauthorized user has broken into my communications network. It is important to understand that the behaviour patterns of the sources that generate such data can vary over time, which affects the prediction model if nothing is done regarding the variation of those behaviour patterns. For example, regarding the energy consumption in a home, let's imagine that a person changes job and moves to a night shift. As a result, the patterns of electricity consumption in his/her home change, which would cause a consumption prediction model to begin to fail precisely because the model does not understand that change in behaviour. The drift detector of the present invention will inform the model that something happens with the data, and that the model should erase everything it knows and start learning again.

In addition to detecting concept drift, the method of the invention also takes into account other restrictions imposed by DSM itself, which call for a redefinition of the previous approach of CA for data mining. Algorithms learning from data streams must operate under a set of conditions: each instance of the data stream must be processed only once; the time to process each instance must be low, which can be of the order milliseconds in the most restrictive scenarios, such as intrusion detection in telematic networks or in industrial prognosis; only a few stream data instances can be stored (limited memory); the trained model must provide a prediction at any time; and the distribution of the data stream may evolve over time.

A first aspect of the invention relates to a computer-implemented method for making a prediction and detecting drift in a data stream, the method comprising: providing a processing means with at least one stream of data comprising a sequence of data instances $D_{0,t} = d_0, ..., d_t$ representing a demand or use of a service or activity in at least one point in a network, wherein $d_t = (\mathbf{x}_t, y_i)$ is a data instance captured at time t, $\mathbf{x}_t$ is a feature vector and $y_t$ its label, wherein label $y_t$ denotes whether there is an increase or decrease in the demand or use of the service or activity; at the processing means having an embedded cellular automaton defined by the following parameters: (i) lattice formed by a grid of cells, the grid having grid size G, the cells in the lattice being filled with the data instances of the stream of data Do,t; (ii) states assigned to said cells, wherein said states assigned to each cell indicate either an increase or a decrease in the service demand as denoted by the labels $y_i$; (iii) a neighbourhood defined by a radius r, and (iv) at least one local rule, the neighbourhood being used to evaluate the at least one local rule: initializing the grid using a set of P preparatory data instances $[(X_t, y_t)]_{t=0}^{t=P-1}$; every time a new data instance $d_t$ of a data stream $[(X_t, y_t)]_{t=P}^{t=\infty}$ arrives: predicting the label $y_t$ of the incoming instance, using said label for updating the state of the corresponding cell; checking whether a mutation of a cell state has occurred by comparing the previous state of the cell with the label of the incoming instance and, if a mutation is detected in the cell state: checking the state of the neighbouring cells in a certain radius $r_{mut}$ in a specific period of time, and if the number of neighbouring mutants exceeds a threshold of allowed mutants, determining that a drift has occurred.

In embodiments of the invention, the label $y_t$ of the incoming instance is predicted by observing in which cell of the grid are the values of the incoming instance $\mathbf{X}_t$, and taking as prediction the state of that cell S(c).

In embodiments of the invention, when it is determined that a drift has occurred, the cellular automaton is adapted to the detected change in the stream distribution.

In embodiments of the invention, when a drift has occurred, the cellular automaton is adapted to the detected change in the stream distribution by resetting the grid, the vector states and the vector of time steps in which a mutation was present, and initializing the grid by seeding it with the instances stored in a sliding window of w past instances.

In embodiments of the invention, the method further comprises, in view of the prediction of label $y_t$ of the incoming instance, performing an action, on one or more points in the network.

In embodiments of the invention,_said data instances correspond to one of the following stream data sources: the energy consumption of a certain home or business, traffic flow measurements in a road, data from an industrial machine, readings of a sensor, web page requests, messages posted by a user of a social network telephone conversation traffic, clicks on marketing data by a user of an electronic device, ATM transactions, web searches and electricity, gas and water consumption traces.

In embodiments of the invention, drift in the data stream represents one of the following: non-technical losses in a consumption network, changes in the road network, seasonality, or changes in humidity or temperature.

The proposed method is computationally complete (able to perform any computation which can be done by digital computers) and can model complex systems from simple structures, which puts it in value to be considered in the DSM field. The proposed method not only provides very good results in terms of drift detection, but also achieves a competitive performance as an online classification model. Non-limiting examples of Machine Learning techniques that can be used as classification models are: VFDT (Very Fast Decision Trees), HT (Hoeffding Trees), ARF (Adaptive Random Forest), NB (Naive Bayes) or KNN (k-Nearest Neighbors).

A second aspect of the invention relates to a device for making a prediction and detecting drift in a data stream, comprising: means for providing at least one stream of data comprising a sequence of data instances $D_{0,t} = d_0, ..., d_t$ representing a demand or use of a service or activity in at least one point in a network, wherein $d_t = (\mathbf{x}_t, y_i)$ is a data instance captured at time t, $\mathbf{x}_t$ is a feature vector and $y_t$ its label, wherein label $y_t$ denotes whether there is an increase or decrease in the demand or use of the service or activity; processing means having an embedded cellular automaton defined by the following parameters: (i) lattice formed by a grid of elements or cells, the grid having grid size G, the cells in the lattice being filled with the data instances of the stream of data $D_{0,t}$ ; (ii) states assigned to said cells, wherein said states assigned to each cell indicate either an increase or a decrease in the service demand as denoted by the labels $y_i$; (iii) a neighbourhood defined by a radius r, and (iv) at least one local rule; wherein the neighbourhood is used to evaluate the at least one local rule; wherein the lattice is formed by the at least one stream of data $D_{0,t}$ ; wherein the processing means is configured for: initializing the grid using a set of P preparatory data instances $[(X_t, y_t)]_{t=0}^{t=P-1}$ ;

every time a new data instance $d_t$ of a data stream $[(X_t, y_t)]_{t=P}^{t=\infty}$ arrives: predicting the label $y_t$ of the incoming instance, using said label for updating the state of the corresponding cell; checking whether a mutation of a cell state has occurred by comparing the previous state of the cell with the label of the incoming instance and, if a mutation is detected in the cell state: checking the state of the neighbouring cells in a certain radius $r_{mut}$ in a specific period of time, and if the number of neighbouring mutants exceeds a threshold of allowed mutants, determining that a drift has occurred.

In embodiments of the invention, the processing means is configured to, when it is determined that a drift has occurred, adapt the cellular automaton to the detected change in the stream distribution.

In embodiments of the invention the processing means is configured to, when a drift has occurred, adapt the cellular automaton to the detected change in the stream distribution by resetting the grid, the vector states and the vector of time steps in which a mutation was present, and initialize the grid by seeding it with the instances stored in a sliding window of w past instances.

In embodiments of the invention, said data instances representing a service demand correspond to one of the following stream data sources: readings of a sensor, web page requests, messages posted by a user of a social network, telephone conversation traffic, clicks on marketing data by a user of an electronic device, ATM transactions, web searches and electricity, gas and water consumption traces.

In embodiments of the invention the device further comprises a data communications module configured to send data instances captured by a meter associated to the device and to receive data instances from other devices.

A third aspect of the invention relates to a computer program product comprising computer program instructions/code for performing the method according to the first aspect of the invention.

A fourth aspect of the invention relates to a computer-readable memory/medium that stores program instructions/code for performing the method according to the first aspect of the invention.

The method of the invention shows very good detection drift, which eventually improves the predictive performance of the model employed as compared to employing other drift detection techniques with the same model. Besides, it goes one step further by embodying an interpretable all-in-one approach, implementing classification, incremental learning and drift detection on its own. It additionally shows the ability of learning the data distribution from a few instances, thus the estimation of the number of instances for adaptation in not so relevant. What is more, it is capable of detecting gradual and abrupt drifts. Besides, it is welcomed in DSM tasks where memory and computational resources are constrained.

Additional advantages and features of the invention will become apparent from the detail description that follows and will be particularly pointed out in the appended claims.

## BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 schematically shows an example of application of the present invention. A water supply system and different stages thereof are shown. A prediction of water flow and drift detection and adaptation thereto can be performed at different points in the system. Sensors are disposed in these points in the system in order to collect data (referred to as samples, instances or sensor readings) in the form of a data stream, to be treated for making predictions, drift detection and adaptation and/or training the model.

Figure 2 schematically shows an architecture representing data streams captured at a plurality of sensors in a network, and how the data streams are processed in order to make a prediction and detect concept drift, according to embodiments of the invention.

Figures 3 shows a block diagram of the method for making a prediction, detecting concept drift and adapting thereto, according to embodiments of the present invention.

Figure 4 graphically represents the stream learning approach followed by the CA-based predictive model and drift detector of the present invention. An adaptation mechanism is triggered when drift is detected by the CA. It provides a prediction from data streams captured in a data network.

## DESCRIPTION OF A WAY OF CARRYING OUT THE INVENTION

The proposed method makes a prediction in a data stream, detects drift therein and adapts to the detected drift using a model based on a cellular automaton (CA).

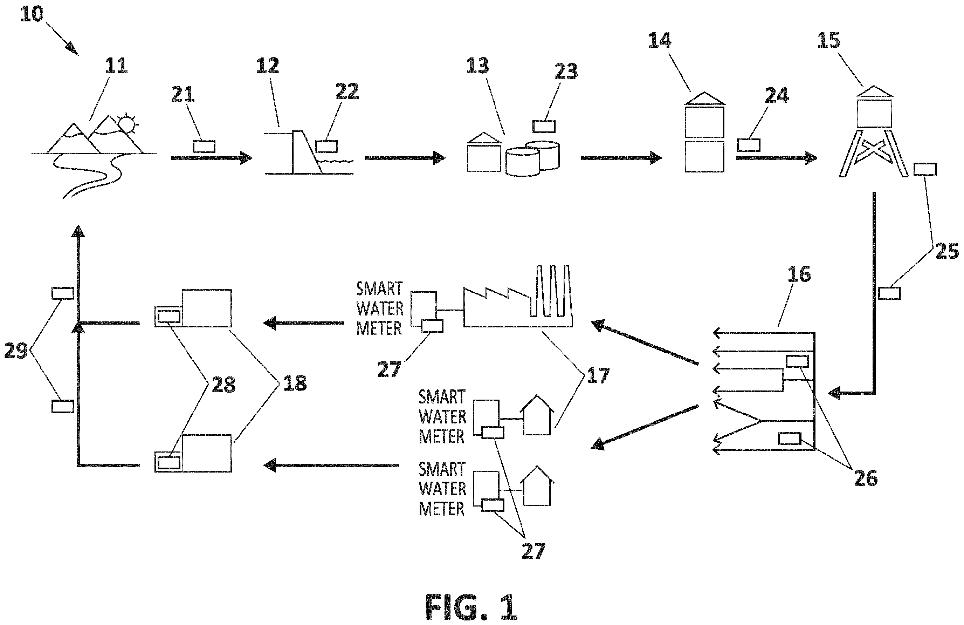

An example of application of the present invention is schematically shown in Figure 1, wherein a water supply system 10 and different stages thereof are shown, including: a water source and extraction system 11; a water reservoir 12; a water storage and purification system 13; a water booster pump system 14; a water tower 15; a water distribution network 16; different facilities of water use 17, such as factories, business areas, public services (hospitals, schools, etc.), private services (shopping centers, restaurants, hotels, etc.) and homes (domestic use); and wastewater treatment plants 18, from which treated water may be forwarded to natural water sources 11 again. A network of sensors (such as water stream flow sensors that are capable of measuring the volume of water per time unit) is disposed at different stages in the water supply system 10. For example: sensors 21 for capturing in real-time data for analysis on water extraction, for obtaining water availability patterns and/or for accurate forecasting in supply planning; sensors 22 for improving water reservoir efficiency and effectiveness; sensors 23 for real-time monitoring of water quality; sensors 24 for monitoring and optimizing energy requirements in pump systems; sensors 25 for providing data (such as volume, quality, pressure, etc.) to a real-time hydraulic modeling water distribution tool; sensors 26 for leaks detection, ghost pipes detection and/or outage detection; sensors 27 in smart meters for reducing non-revenue water, for real-time monitoring of water usage, with application in typical actions associated with smart meters (learn about consumer behavior to enable smart water pricing, for example); sensors 28 for identifying leakages and reduce health risks; sensors 29 for monitoring in real-time the amount of water released/given back to nature. Thus, each sensor 21-29 captures, at the point of the water supply system 10 in which it is located, a data stream composed by sequences of items (instances that corresponds to sensor readings), each having a timestamp and thus a temporal order, and usually arriving one by one.

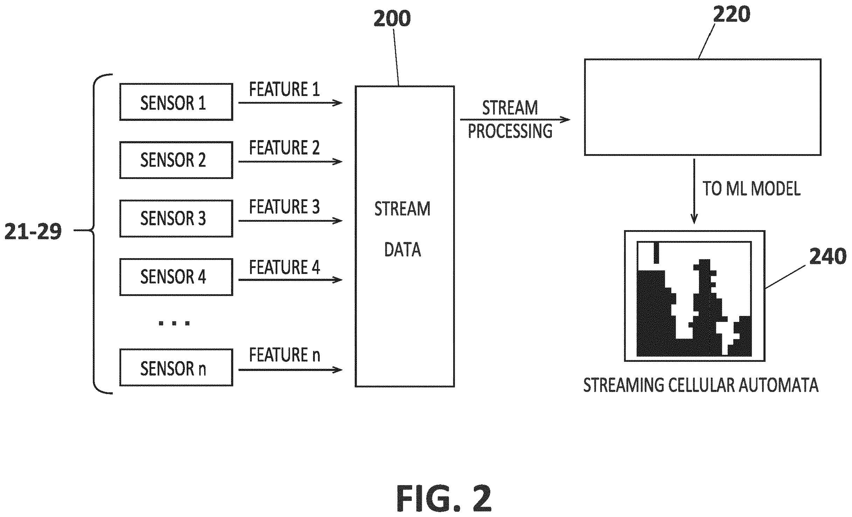

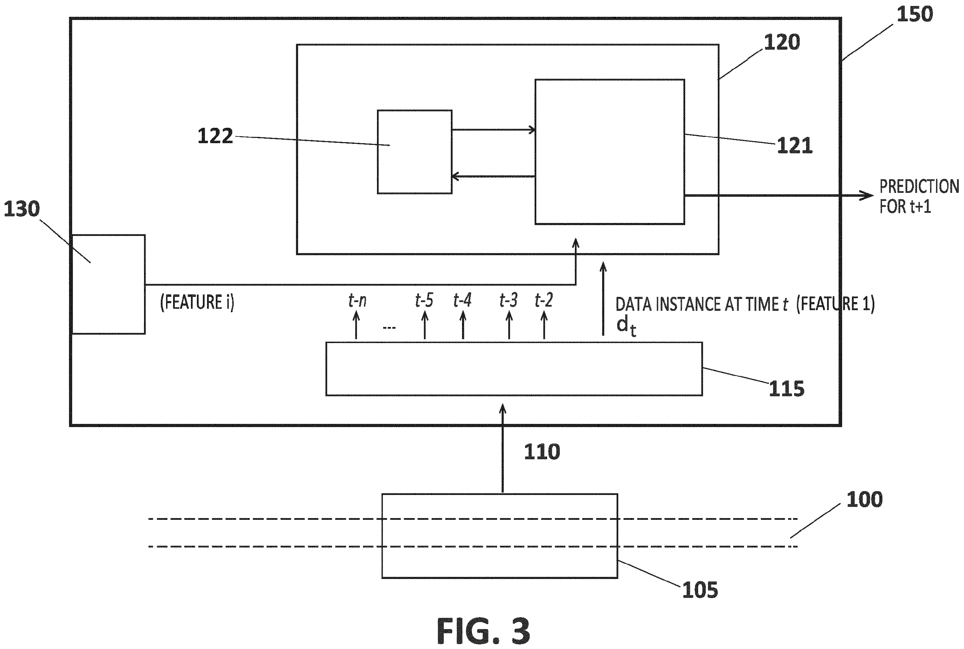

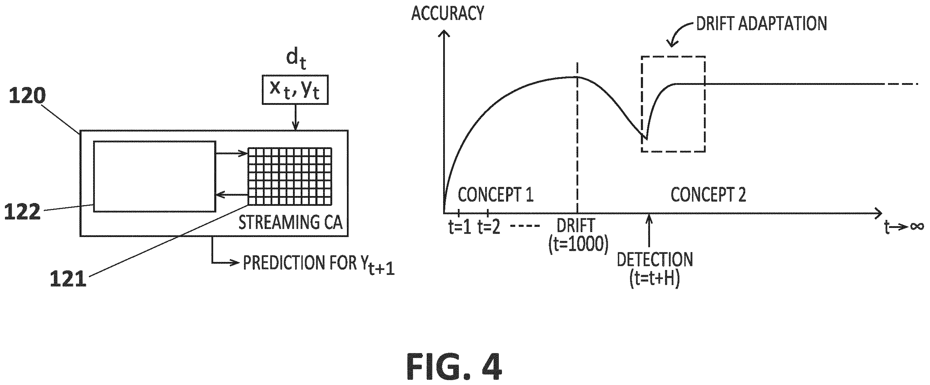

Figure 2 schematically shows an architecture representing data streams captured at a plurality of sensors (SENSOR_1, SENSOR_2, ..., SENSOR_n), for example any of the sensors 21-29 illustrated in Figure 1, or sensors in any other network in which the present invention can be applicable, such as smart grids, networks for traffic flow congestion prediction or industrial supervision networks. In Figure 2, each data stream captured by respective sensors is referred to as FEATURE_n. Thus, SENSOR_1 captures a data stream referred to as FEATURE_1, SENSOR_2 captures a data stream referred to as FEATURE_2, and so on. In other words, a feature refers to a data stream captured at a point in a network (for example, in water supply system 10) by a corresponding sensor of the network of sensors 21-29. Block 200 represents a data instance $d_t, = (X_t, Y_t)$ or $(\mathbf{x}_t, y_t)$ in which different features (in this specific case coming from respective different points) are aggregated. All these features are integrated constituting the data instance $(X_t, Y_t)$ or $(\mathbf{x}_t, y_t)$ that serves as input for the streaming architecture 220 in Figure 2 (120 in Figures 3 and 4). The stream of data provided at the output of block 200 is delivered to stream processing means 220, wherein data are processed to feed a predictive model (such as a machine learning model), which is based on a cellular automaton (CA) 240, in particular a CA having concept drift detection capabilities. Thus, in order to make a prediction of a magnitude at a certain point in a network (such as a water flow prediction at a point 11-18 in the water supply system 10) and to detect concept drift, the method may take into account features captured at one or more points in a network, such as the data stream (feature) captured at said specific point in the network and data streams (features) indicating a magnitude (e.g. the water flow) captured at different points (typically upstream) in the system.

The process generating this stream of data is typically characterized by an intrinsic non-stationary phenomenon -a drifting phenomenon. In other words, sensors 21-29 may suffer from concept drift, in which case they need a drift detection and adaptation mechanism. In the context of the present invention, drift means changes in the distribution of streaming data. This means that learning methods have to adapt to the evolving conditions and to detect the changes. In the example of a water supply system, the mentioned non-stationarity can be due, for example, to seasonality or periodicity effects, changes in the users' water consumption habits, water leaks, thermal drifts, heating effects, low battery or aging effects in sensors 21-29 deployed at different points in the water supply system 10, etc. Processing such fast streams demands high memory and processing resources/means 220. Non-limiting technologies for processing the captured data streams may be, as a matter of example, the well-known Spark Streaming, which enables scalable, high-throughput, fault-tolerant stream processing of live data streams. Such architecture, or any other enabling such stream processing, may be implementing in any conventional suitable processing means (processor or group of processors). Non-limiting examples of processing means are a central processing unit or at least one core thereof, a graphics processing unit, a field-programmable integrated circuit such as an FPGA (i.e. field-programmable gate array) or an embedded circuit (e.g. a system-on-chip, a multiprocessor system-on-chip), and a combination thereof.

Learning and adaptation to drift in non-stationary environments requires modelling approaches capable of monitoring, tracking and adapting to eventual changes in the produced data. In this context, a drift may occur in the feature domain (new features appear, part of them disappear, or their value range evolves) or in the class domain (new classes/labels/target variables emerge or some of them fade along time). More formally, concept drift between time step $t_{-1}$ and t can be defined as:

$$\exists x \in X : p_{t_{-1}}(\mathbf{x}, y) \neq p_t(\mathbf{x}, y),$$

where $p_{t-1}(\mathbf{x},y)$ and $p_t(\mathbf{x},y)$ are the joint probability distributions at time steps $t_{-1}$ and $t$, respectively, between the input variables/features $x$ (that is, the readings of the sensors at a concrete time step) that conform a data instance and the classes/labels/target variable $y$. Specific terminology is often used to indicate the cause or nature of changes. In terms of what is changing drifts can be: (a) "real drift", when the posterior probabilities of classes $p(y|\mathbf{x})$ vary over time independently from variations in $p(x)$, having an impact on unconditional probability density functions, and (b) "virtual drift", when the distribution of the input data $p(x)$ changes without affecting the posterior probabilities of classes $p(y|\mathbf{x})$, but affects only the conditional probability density functions. From now on the term concept drift or drift will refer to real drift.

Figure 3 shows a block diagram of the method for making a prediction and detecting drift in a data stream comprising a sequence of data instances $D_{0,t} = d_0, ..., d_t$ at different times t-n, ...t-1, t, wherein data instance $d_t, =(X_t,Y_t)$. Data instances may correspond to one of different stream data sources, such as, but not limiting: readings of a sensor, web page requests, messages posted by a user of a social network, telephone conversation traffic, clicks on marketing data by a user of an electronic device, ATM transactions, web searches and electricity, gas and water consumption traces. For example, in smart grids, stream data represents the energy consumption of a certain home/business. In this case, the method of the invention may detect non-technical losses (NTL), in other words, the method predicts whether there are patterns in the consumption data by which non-technical losses can be declared. For instance, fraudulent practices (e.g. smart meter tampering) can impose a change in the energy consumption data which, if detected by the model (method of the invention), can elevate an alarm and trigger human inspection of the monitored home/business. In this case, the drift detector not only can serve as a detector of a fraudulent practice, but also accommodate the prediction to behavioral changes of the user(s) consuming energy in the asset (e.g. holidays, changes of activity, etc).

In another example, in a system for traffic flow congestion prediction in urban environments, stream data represents traffic flow measurements (# vehicles per hour, average traffic speed per unit of time, or any other traffic flow measurement). In this case, the model or method may predict whether there will be congestion in a certain road within a certain time horizon. In this case, from the observed traffic flow measurements, a prediction is made, indicating if the traffic will suffer from congestion or not within a given horizon. Here drift emerges from changes in the road network (e.g. cuts due to roadworks, protests in streets, accidents, etc), which make the traffic flow change over time.

In yet another example, the method may detect failures in industrial machinery. In this case, stream data represents data from an industrial machine (e.g. a drilling machine or a HVAC system), which may correspond to e.g. temperature of the internal engine, humidity or process parameters that can affect its normal working regime. These data are collected by a sensor. The model processes such data towards producing a prediction that indicates whether the machine will undergo a failure within a certain time horizon. When the output indicates that the machine will fail, this prediction can be leveraged to perform maintenance before the machine actually breaks. Drifts may occur due to expected and/or unexpected reasons. For instance, seasonality over the year (winter/summer) may elevate the temperature of the monitored machine, requiring that the model must adapt its knowledge to these new circumstances. Likewise, a simple change in the distribution of the machinery over the plant can make its humidity, vibration level or any other physical parameter vary with respect to the levels recorded in its original position, thereby changing the patterns in data that are symptomatic of a failure.

Block 120 represents a streaming architecture. Stream processor 120 comprises a module for stream learning and concept drift detection 121. Module 121 is based on a CA, which is adapted for stream learning and concept drift detection. When concept drift is detected by the CA, a module for drift adaptation 122 is applied. Module 121 delivers a prediction for t+1, while it detects concept drift, explained later in detail. Input 110 represents a data stream generated at block 105. Block 105 can represent, for example, a meter, which takes measurements of something, as explained in the examples above. For example, with no limiting character, in an application for prediction of water flow and detecting changes in the water flow, as shown in Figure 1, meter 105 takes measurements of water flow, for example travelling along a water pipe 100. In this case, meter 105 is assembled, connected or associated to a sensor 150. Sensor 150 may be any one of sensors 21-29 in Figure 1. In embodiments of the invention, the sensor 150 has a data communications module 130, configured to send/receive data, in particular, it can send data instances captured at sensor 150 to other sensors in the network of sensors, and receives data instances captured at other sensors. Data communications module 130 typically implements a wireless communications protocol. It is out or the scope of the present invention.

In certain applications, data instances $d_t = (X_t, Y_t)$ are received from other sensors in the network of sensors represent different features as schematized in Figure 2. However, in general, $X_t$ is composed of features that can be collected by a single sensor or generated by a sensor from raw data collected by the sensor.

Thus, block 105 generally represents a process for generating a stream of data 110. A data stream is composed by sequences of items or instances, each having a timestamp and thus a temporal order, and usually arriving one by one. Captured data streams imply huge volumes of data. The amount of data in a data stream can be so high, and the time lapse T between consecutive instances is so short (in other words, data streams are fast and large, usually infinite), that in practice all historical data cannot be explicitly stored. Information must be extracted and processed from the data streams in real time, that is to say, within said time lapse T. As a result, a stream of data 110 is obtained. The data stream 110 can be represented as $d_1, d_2, ..., d_t$ (or similarly, as $d_{t-n}, ..., d_{t-1}, d_t$) wherein each piece of data (data instance) $d_1, ..., d_t$ is captured at respective time instant $t_1, ..., t_n$. There is a time lapse T between consecutive instances, such that $t_{i+1} = t_i + T$. At block 115, data streams are read once per arriving sample (instance, reading). Block 115 is a stream reader, implemented for example with a circular buffer (FIFO). In Figure 3, the size of the circular buffer is n. The stream reader 115 delivers a data instance (sample, sensors readings) at each time instant t. In Figure 3, n time and infinite instants are represented. Current data instance at time t is represented as being provided to block 120, which implements a predictive model embodied in a CA 121.

As shown in Figure 4, the predictive model embodied in a CA 121 makes a prediction (for example, but not limiting, of a water consumption/usage at a certain point in a water supply system), or whether there are patterns in a consumption data by which non-technical losses can be declared, or whether there will be congestion in a certain road within a certain time horizon, or whether a machine will undergo a failure within a certain time horizon. The predictive model embodied in a CA 121 is then updated when drift is detected. Drift is detected by the CA 121 itself. When drift is detected, adaptation 122 thereto can be done. In Figure 4, block 120 is a processor, in particular a stream processor. In Figures 3 and 4, the stream processor 120 implements /embeds, a module for stream learning and concept drift detection 121. Module 121 is based on a CA, which is adapted for stream learning and concept drift detection. Module 121 delivers a prediction for t+1, while it detects concept drift, as explained next.

In Figures 3 and 4, module 121 is a streaming CA capable of detecting concept drift. In other words, it is a CA for RtML which incrementally learns under evolving conditions (drifts or changes) and is capable of detecting by itself those evolving conditions (drifts or changes). It implements an adaptive predictive model that detects -and adapts to- changes (drift) as fast as possible. Such model is based on cellular automata algorithms in real-time. Figure 4 shows (right side) a graph representing the performance accuracy (y axis) of the prediction performed by the model of the invention along t (x axis). The model is schematically represented on the left of the graph. Stream processor 120 receives a data instance $d_t$. The cellular automaton 121 embedded in module 120 performs a prediction for $y_{t+1}$ and detects drift; an adaptation stage 122 for drift adaptation is executed when drift is detected. At an unknown certain time instant, a concept drift may occur, that is to say, concept (data distribution) changes from "CONCEPT 1" (data distribution before drift appears) to "CONCEPT 2" (the new data distribution after drift appears). As already explained, concept drift may occur due to different causes, such as seasonality or periodicity effects (day/night; winter/summer), changes in a users' consumption habits, leaks, thermal drifts, heating effects, low battery in a sensor, change in vibration level, fraudulent practices, changes in a road network, etc. In the graph shown in Figure 4, assuming that the drift occurs for example at t=1000, a proper detection is required at t=t+H (a detection delay must be assumed). Immediately after the drift detection, drift adaptation starts at module 122, thus achieving quick adaptation to the new concept (concept 2) while forgetting the old one (concept 1).

Next, it is explained how concept drift is detected within the cellular automaton 121 in a possible embodiment of the invention. A CA can be formally defined as follows, by adopting the notation used by in Kari, J., in Theory of cellular automata: A survey; Theoretical Computer Science 334 (2005) 3-33:

$$ A \doteq (d, S, f_{\boxplus}, f_{\cup}), $$

where d represents the dimension, S a finite set of discrete states, $f_{\boxplus}(\cdot)$ is a function that given a cell's coordinates at its input, returns the neighbors of the cell to be used in an update rule, and $f_{\cup}(\cdot)$ is a function that updates the state of the cell at hand as per the states of its neighboring cells. Therefore, in the case of a radius R=1 von Neumann neighbourhood defined over a d = 2-dimensional lattice, the set of neighbouring cells and state of cell with coordinates c= [i,j] is given by:

$$f_{\boxplus}([i,j]) = \{[i,j+1],[i-1,j],[i,j-1],[i+1,j]\} \qquad (1)$$

$$S(c) = S([i,j]) = f_{\circlearrowright}(S([i,j+1]),S([i-1,j]),S([i,j-1]),S([i+1,j])) \qquad (2)$$

i.e., the status vector S([i,j]) of the [i,j] cell within the lattice is updated according to the local rule $f_{\circlearrowright}(\cdot)$ applied over its neighbours given by $f_{\boxplus}([i,j])$. In general, in a d-dimensional space, a cell's von Neumann neighbourhood will contain 2d cells, and a Moore neighbourhood will contain 3d-1 cells. With this in mind, a cellular automaton should exhibit three properties to be treated as such: i) parallelism or synchronicity (all of the updates to the cells compounding the lattice are done at once); ii) locality (when a cell [i,j] is updated, its state S[i,j] is based on the previous state of the cell and those of its nearest neighbours), and iii) homogeneity or properties-uniformity, (the same update rule $f_{\circlearrowright}(\cdot)$ is applied to each cell).

In order to use CA in data mining, data instances flowing over time must be mapped incrementally to the cells of the grid. A CA can be described as a set of objects characterized by the following components (four mutually interdependent parts):

(i) a lattice or grid of integer numbers (Z), infinitely extended, having dimension d belonging to Z. Each portion or element within the lattice or grid is called as cell;

(ii) states: each cell can have a value within Z from a finite set of states k;

(iii) neighbourhood: each cell is characterized by its neighbourhood, which is defined as a finite set of cells surrounding that cell; and

(iv) local rules: a transition function f is applied to all cells in the lattice; function f takes as arguments the values of the cell and the values of its neighbours, and returns the new value that the cell will have in a next stage of time. Function f is applied homogeneously to all the cells in the lattice at each discrete time step.

Regarding the grid or lattice, in a data mining problem with n features, one grid dimension is usually assigned to each feature. After that, it is necessary to split each grid dimension by the values of the features, in a way so as to obtain the same number of cells per dimension. To achieve that, "bins" must be created for every dimension by arranging evenly spaced intervals based on the maximum and minimum values of the features. These bins delimit the boundaries of the cells in the grid. So, a lattice is created by a grid of elements (cells), which can be composed in one, two or higher dimensional space, but typically composed of uniform squared cells in two dimensions. In the context of the present invention, the lattice is formed by at least one feature representing data instances collected at a system or network. In other words, a feature refers to a data stream captured at the network or system. Thus, the lattice represents the dimensions of the cellular automaton. In general, a single sensor can extract a plurality of different features from the data it captures. As a matter of example, let's image that a sensor is embodied as a network traffic analysis device. The network traffic analysis device analyzes the communication packets/datagrams that are established between different users of the network. It is a single point of measurement. The device can pre-process the packets to extract, for example, mean and standard deviation of the latency between pairs of users, maximum and minimum payload of datagrams sent as multicast, among other features. The features to be extracted from captured data (raw data) depend on the application.

Regarding the states, a CA contains a finite set of discrete states |S|, whose number and range are dictated by the phenomenon under study. In other words, the number of discrete states will correspond to the number of labels (classes) considered in the data mining problem. The simplest CA can be built using only one Boolean state in one dimension. In a preferred embodiment of the invention, there are two possible states: up/down (in other words, 0/1 or increase/decrease of, for example, demand/usage of a certain service, such as water, electricity or gas, the presence/no presence of an intruder in a local area network, or the use/no use of offensive language in social networks, among others).

The neighbourhood, which is used to evaluate a local rule, is defined by a set of neighbouring (adjacent) cells. A neighbouring cell is any cell within a certain radius of the cell in question. Additionally, it is important to specify whether the radius R applies only along the axes of the cell space (von Neumann neighbourhood) or if it can be applied diagonally (Moore neighbourhood). In two dimensions, the R=1 von Neumann neighbourhood or the R=1 Moore neighbourhood are often selected.

Finally, a local rule defines the evolution of each CA. It is usually realized by taking all states from all cells within the neighbourhood and by evaluation of a set of logical and/or arithmetical operations written in the form of an algorithm. In other words, local rules define how to update a cell with respect to its neighbours. In data mining the update rule f(.) can adopt several forms. In embodiments of the invention, it may take the form of a majority vote among the states (labels) of its neighbours. For example, for d=2, meaning 2 features and therefore 2 dimensions:

$$S([i,j]) = \underset{s \in S}{\arg max} \sum_{[k,l] \in f_\boxplus([i,j])} \mathbb{I}(S([k,l]) = s), \qquad (3)$$

where the value of $f_\boxplus([i,j])$ returns the coordinates of neighbouring cells of [i,j], and $\mathbb{I}(.)$ is an auxiliary function taking value 1 if its argument is true (and 0 otherwise). Any other update rule can be defined to spread the state activation of each cell over its neighbourhood.

The execution of a CA also requires initialization and generations. During the initialization, the grid is seeded with the feature values of the instances that belong to a training set. For example, in order to decide the state of each cell, if the local rule is the "majority vote" already mentioned, a label corresponding to the majority of training data instances with feature values falling within the range covered by the cell, is assigned. After that, cells of the grid are organized into regions of similar labels (cells will organize themselves into regions of similar labels). In other words, a training set of a certain time duration is used (for example, several seconds, minutes or days, depending for example on the type of data of the data stream or on the point of a system or network at which a prediction must be made (for example, a prediction of demand/usage of a service). When the initialization step finishes, some cells may remain unassigned, i.e. not all of them are assigned a state (label). In other words, the training dataset used to prepare the CA for online learning might not be large enough to fill all the cells in the grid. In such a case, it becomes necessary to evolve the grid several times (generations) until all cells are assigned a state. In other words, different generations or iterations applying the local rule are made, until no cells are left empty. In this evolving process, each cell calculates its new state by applying the update rule over the cells in its neighbourhood. All cells apply the same update rule, all cells being updated synchronously and at the same time. Here lies a most distinctive characteristic of CAs: the update rule only inspects its neighboring cells, being the processing entirely local. No global or macro grid characteristics are computed.

A data stream mining (DSM) process that may evolve over time can be formally defined as follows: given a time period [0, t], the historical set of instances collected at a certain point in a network or system (for example at sensor 150) is denoted as $D_{0,t} = d_0, ..., d_t$, where $d_t = (\mathbf{x}_t, y_t)$ is a data instance, $\mathbf{x}_t$ is a vector of features and $y_t$ its label. Label $y_t$ is also referred to as class or target variable. For example, in the context of prediction (such as a prediction of demand/usage or a certain service or activity, such as water, electricity or gas service, or requests to visits to a website, or clicks on a marketing object shown on a webpage, or transaction in an ATM machine, or the presence of an intruder in a local area network, or the use of offensive language in a social network; or a prediction of road traffic congestion; or a prediction of failure of a component of industrial machinery), label $y_t$ denotes whether there is an increase or a decrease (or presence or absence) in the service/activity demand/consume/occurrence (water/electricity/gas demand; visits to a webpage or social network; traffic flow in a road; etc.). It is assumed that $D_{0,t}$ follows a certain joint probability distribution $P_t (x, y)$. These data streams are usually affected by non-stationary events (drift or concept drfit) which may eventually change their data distribution, provoking that predictive models trained over these data become obsolete. In the context of the present invention, drift means changes in the distribution of streaming data. This means that learning methods have to adapt to the evolving conditions and detect the changes. The mentioned non-stationarity can be due to different factors, depending on the application and type of data; for example, to seasonality or periodicity effects, changes in the users' consumption habits, weather conditions (thermal drifts, heating effects), defects in the network or network equipment, low battery or aging effects in sensors deployed at different points in the network, etc. Processing such fast streams demands high memory and processing resources/means (for example, block 220 in Figure 2). Non-limiting technologies for processing the captured data streams may be, as a matter of example, the well-known Spark Streaming, which enables scalable, high-throughput, fault-tolerant stream processing of live data streams. Such architecture, or any other enabling such stream processing, may be implementing in any conventional suitable processing means (processor or group of processors). For example, a x8664 architecture with 8 processors Intel® Core™ i7 at 2.70 GHz, and 32DDR4 memory running at 2,133 MHz. Thus, concept drift at timestamp t+1 occurs when $P_t (\mathbf{x}, y) \neq P_{t+1} (x, y)$, i.e. as a change of the joint probability distribution of x and y at time t. Concept drift is detected by the CA itself as explained next.

In addition to the presence of concept drift, DSM also imposes by itself its own restrictions, which calls for a redefinition of the previous CA for data mining. Algorithms learning from data streams must operate under a set of conditions: each instance of the data stream must be processed only once; the time to process each instance must be low; only a few stream data instances can be stored (limited memory); the trained model must provide a prediction at any time; and the distribution of the data stream may evolve over time. Therefore, when adapting a CA for DSM, the above restrictions must be taken into account to yield a CA capable of learning incrementally, and with drift detection and adaptation mechanisms. The present invention provides a method that encompasses those restrictions, based on a new cellular automaton designed for concept drift detection.

The method makes a prediction (for example, a binary prediction, such as whether the consumption/usage of a certain service or activity at a certain point in a network will increase or decrease in the next sampling time or time instant t+1, or whether there is presence or absence of an intruder in a local area network, or whether there is/isn't use of offensive language in a social network) using a CA, while detects drift with the CA itself. To this end, the relationship between the consumption/usage/presence of the service/activity/action under study at sampling times t-W, t-W+1, ..., t at a point of the network is modelled and correlated with the future increase or decrease of consumption at the same point. The CA-based method of the present invention makes a prediction from a dataset which is formed by couples ($\mathbf{x}_t$, $y_t$) (i.e. an instance), and builds a mapping function $\hat{y}_t = (\mathbf{x}_t, y_t)$ by using these couples. One of the goals of the CA-based model is to select the best function that minimizes the error between the actual output ($y_t$) of a system and predicted output ($\hat{y}_t$) based on instances of the dataset (training instances). Therefore, $y_t$, $\hat{y}_t \in \{0,1\}$ or also $y_t$, $\hat{y}_t \in \{$ increase, decrease $\}$. In the testing phase where a prediction is required, the CA searches the cell that corresponds to the incoming data instance $d_t$, and it assigns the state of the cell to $\hat{y}_t$. Thus, the CA-based model predicts whether a demand/usage of a service/activity/use at a point in a network (such as a supply network) will increase or decrease in the next sampling instant t+1, and detects the occurrence of concept drift, both within the CA block 121 (Figures 3 and 4). The drift detection mechanism performed within the CA relies on the fact that a recent number of mutations in the neighbourhood of a cell that has just mutated may serve as a symptomatic indicator of the occurrence of a drift. Based on this fact, drifts in the data stream are efficiently identified. A CA for concept drift detection is defined in Algorithm 1 and explained next.

First, the CA is created by setting the value of its parameters (detailed as inputs in Algorithm 1) and following the characteristics of the given dataset (lines 1 to 5 as defined in Algorithm 1). The input data to the CA are: a set of P preparatory data instances $[(X_t, y_t)]_{t=0}^{t=P-1}$ ; training/testing data for the rest of the stream $[(X_t, y_t)]_{t=P}^{t=\infty}$ ; the grid size G (bins per dimension); a local update rule $f_{\circlearrowright}(.)$ ; neighbourhood function $f_{\boxplus}(c)$ for cell with coordinates $c \in \mathcal{G} = \{1, ..., G\}^d$ ; radius r for the neighbourhood operator (size of the neighbourhood of a cell) used for classification; radius $r_{mut}$ for the neighbourhood operator (size of the neighbourhood of a cell) used for drift detection; maximum number of allowed mutants *n_muts_allowed*, which represents the maximum amount of neighbor cells within the neighbourhood of a given cell, allowed to have a state different from the state of the given cell so that no concept drift is declared; time period *mutation_period*, which represents the time within which the number of changes in the neighbor cells of all the cells in the network is measured; sliding window *W* of size w, which represents the size of the data sliding buffer kept in memory for performing detection and classification tasks. As output, the trained CA produces predictions $\hat{y}_t \, \forall t \in [P, \infty]$.

Once the CA is created, a reduced number of preparatory instances of the data stream $[(X_t, y_t)]_{t=0}^{t=P-1}$ is used to initialize the grid of the CA. This grid is seeded with these instances, and then the CA is evolved for several iterations (generations) by applying the local rule until all cells are assigned a state i.e. the labels of the preparatory instances (lines 6 to 10 as defined in Algorithm 1).

Once the preparatory process is finished, it must be ensured that several preparatory data instances have not seeded the same cell, because each cell must reflect only one single state. Thus, the most frequent state must be assigned to each cell by inspecting the labels of all those instances that fell within its boundaries. Then, it must be ensured that all cells have an assigned state. Since this last process can again seed a cell with several instances, this issue must be addressed to ensure that the cell only reflects one single state (lines 11 to 13 as defined in Algorithm 1).

When the preparatory process is finished, the CA starts predicting the data instances coming from the stream in a test-then-train fashion as disclosed for example by Joao Gama et al (A survey on concept drift adaptation, ACM computing surveys (CSUR) 46, 4(2014), 44) (lines 14 to 28 as defined in Algorithm 1). This process is based on first predicting the label of the incoming instance $\hat{y}_t$, and next updating the limits of the cells in the grid should any feature value of the processed instance fall beyond the prevailing boundaries of the grid (lines 16 to 18 as defined in Algorithm 1). Secondly, the label of the incoming instance is used for training, i.e. for updating the state of the corresponding cell (line 19 as defined in Algorithm 1). In line 15 of Algorithm 1, the CA stores the incoming instance ($X_t$) in a sliding buffer (window) W of size w, which is assumed to be small enough not to compromise the computational efficiency of the overall approach. This data sliding buffer allows to store enough information so that, when a drift is declared, the CA can be trained again. Prediction of the label $\hat{y}_t$ of the incoming instance $X_t$ is made by observing to which cell c of the CA is the incoming instance $X_t$ assigned and assigning its state S(c).

During the test-then-train approach, the CA checks if a mutation of the cell states has occurred (line 21 of Algorithm 1). If the previous state of the cell (before the arrival of the incoming instance) is different from the label of the incoming instance, a mutation has happened. When there is a mutation, the current time stamp is assigned to the cell in the grid of time stamps (line 22 of Algorithm 1). Then, the CA checks the state of the neighbouring cells in a radius $r_{mut}$ in a specific period of time *mutation_period* (line 23 of Algorithm 1). If the number of neighbouring mutants exceeds a threshold *n_muts_allowed* (line 24 of Algorithm 1), the CA considers that a drift has occurred.

After drift detection, it is time to adapt the CA to the detected change in the stream distribution. To this end, the grid, the vector of states and the vector of time stamps in which a mutation was present are reset (lines 25 to 27 of Algorithm 1). Finally, the preparatory process is carried out by seeding the grid with the instances stored in the sliding window W (line 28 of Algorithm 1). In embodiments of the invention, adaptation to the declared drift is done externally to the CA, as shown in Figures 3 and 4, in which module 122 implements an adaptation mechanism for the CA. In other embodiments of the invention, adaptation to the detected drift is done within the CA, as shown for example in Algorithm 1, lines 25-28.

---

**Algorithm 1**: Steps of cellular automaton for concept drift detection

**Input:** Preparatory data instances $[(X_t, y_t)]_{t=0}^{t=P-1}$ ; training/testing data for the rest of the stream $[(X_t, y_t)]_{t=P}^{t=\infty}$ ; the grid size *G* (bins per dimension); a local update rule $f_\cup(.)$ ; a neighborhood function $f_\boxplus(c)$ for cell with coordinates $c \in \mathcal{G} = \{1, ..., G\}^d$ ; radius *r* for the neighbourhood operator; radius $r_{mu}t$ ; maximum number of allowed mutants *n_muts_allowed*; time period *mutation_period*; sliding window *W* of size *w*.

**Output:** Trained CA for concept drift detection producing predictions $\hat{y}_t$ $\forall t \in$ $[P, \infty]$

1 Let d be equal to the number of features in $X_t$

2 Let $|\mathcal{S}|$ be the number of classes (alphabet of $y_t$)

3 Set a vector of state hits per cell, $h_c = [] \forall c \in \mathcal{G}$ , and a vector of mutations per time step and cell: $h_m = [] \forall m \in \mathcal{G}$

4 Initialize the limits of the grid: $\left[\left(lim_n^{low}, lim_n^{high}\right)\right]_{n=1}^d$

5 Create the grid as per G, *n* and $\left[\left(lim_n^{low}, lim_n^{high}\right)\right]_{n=1}^d$

6 **for** *t*=0 *to* P-1 **do** // Preparatory process

7 Update limits as per $X_t$, e.g., $lim_n^{low} = \min \{lim_n^{low}, x_t^n \}$

8 Update grid bins as per G and $\left[\left(lim_n^{low}, lim_n^{high}\right)\right]_{n=1}^d$

9 Select the cell c in the grid that encloses $X_t$

10 Append $y_t$ to the vector of state hits in the cell, e.g. $h_{c'} = [h_{c'}, y_t]$

11 Iterate with r and check $|h_c|$ to ensure one state per cell in *G*

12 Guarantee at least $|h_c| = 1$ in all cells in *G*

13 Iterate with r and recheck $|h_c|$ to ensure one state per cell

14 **for** *t= P to ∞* **do** // DSM processing

15 Update W with the incoming instance ($X_t, y_t$)

16 Predict $\hat{y}_t$ as S(c), with c denoting the coordinates of the cell enclosing $X_t$

---

12

(continued)

| Algorithm 1: Steps of cellular automaton for concept drift detection |
|---|

17 Update limits as per $\boldsymbol{X}_t$, e.g., $lim_n^{low} = \min\{lim_n^{low}, x_t^n\}$

18 Update bins as per G and $\left[\left(lim_n^{low}, lim_n^{high}\right)\right]_{n=1}^{d}$

19 Save the current cell state: $cur\_st = S(c)$

20 Update $S(c) = y_t$ (i.e. the verified class of test instance)

21 if $cur\_st =\neq y_t$ then // A mutation occurs in cell

22 Append $t$ to the vector of mutations: $\boldsymbol{h_{m'}} = [\boldsymbol{h_{m'}}, t]\ t]$

23 Calculate # neighbours mutants $n\_muts$ of the cell, within radius $r_{mut}$ and time $mutation\_period$

24 if $n\_muts >= n\_muts\_allowed$ then //Detection

25 Initialize $\boldsymbol{h_m}$ , $\boldsymbol{h_c}$

26 Initialize grid limits: $\left[\left(lim_n^{low}, lim_n^{high}\right)\right]_{n=1}^{d}$

27 New grid as per G, n, $\left[\left(lim_n^{low}, lim_n^{high}\right)\right]_{n=1}^{d}$

28 Preparatory process (6-10) with instances in W

Turning back to Figure 3, so far module 121 has been described, explaining how the CA predicts the label $\hat{y}_t$ of the incoming instance $X_t$ and detects a drift when it occurs (when the number of neighbouring mutants in a radius $r_{mut}$ in a specific period of time $mutation\_period$ exceeds a threshold $n\_muts\_allowed$).

In sum, a method for making a prediction and detecting drift in a stream of data, for example captured by sensors disposed along a network, has been disclosed, in which a cellular automaton performing correctly in real-time conditions has been used. The method also makes demand/usage predictions of a service/activity. The method can be used to detect changes and predict for example consumption/demand in a facility (such as a home or industrial facility), or to detect changes and make a prediction on the service demand at any point in a supply system equipped with sensors capable of collecting data streams associated to a flow, or to predict the presence or absence of an intruder in a local area network, or whether there is/isn't use of offensive language in a social network), or traffic road congestion in a road, or failure of a component in an industrial environment. As can be observed, drift adaptation according to the present invention shows a natural ability to learn incrementally, which is a crucial requirement under the constrained conditions present in RtML. Besides, only a few parameters are required, which simplifies the parameter tuning process in drifting environments. The method uses minimum time and low memory at the same time. In addition, the CA learns a data distribution with relatively few instances which, in the context of stream learning, involves a quicker preparation (warm-up) phase. What is more, in setups where computational costs must be reduced even more, a subsampling strategy can be recommended, where only a fraction of instances of the data stream is considered for model updating. In these scenarios, the capability of the CA-based model of the present invention to represent the data distribution with a few instances fits perfectly. Also, the CA-based model of the present invention proves an excellent capability of evolving through several generations and represent a data distribution from a few annotated data instances. Finally, it adapts to evolving conditions where changes (drifts) provoke that learning algorithms have to forget and learn the old and the new concept, respectively.

By observing the evolution of the information contained in the automata, an action can be performed, if necessary, on one or more points in the network or system in which data streams are collected. As a matter of example, such actions may be redirecting computer network traffic through alternative routes, denying access to certain users (for example access to a communications network, a web page or a social network), resizing a communications network or repairing a device, such as an ATM machine, a sensor, a pipe or an industrial component.

In order to assess the performance of the proposed CA including drift detector, several experiments have been designed with synthetic and real datasets. The computer used in the experiments is based on a x8664 architecture with 8 processors Intel(R) Core(TM) i7 at 2.70GHz, and 32DDR4 memory running at 2, 133 MHz. The scikit-multiflow framework (Montiel J. et al., Scikit-multiplow: a multi-output streaming framework. The Journal of Machine Learning Research 19, 1 (2018), 2915-2914) allows generating several kinds of synthetic data to simulate the occurrence of drifts. Concretely, we have used the SineGenerator function for the Abrupt Sine1, Abrupt Sine2, Gradual Sine1, and Gradual Sine2 datasets, as well as the RandomTreeGenerator function for the Abrupt RT and Gradual RT datasets. In total, we have created 6 synthetic abrupt and gradual datasets of two dimensions to ease the visualization of the behavior of proposed CA. They consist of 2 numerical features and a balanced binary class, and exhibit 4 concepts and 3 drifts at time steps 5, 000, 10, 000, and 15, 000. They have 20, 000 instances in total. The 6 datasets are: (1) Abrupt Sine1: it is ruled by a sequence of classification functions: SINE1, reversed SINE1, SINE2, and reversed SINE2. It has 3 abrupt drifts at time steps 5, 000, 10, 000, and 15, 000. (2) Abrupt Sine2: similar to Abrupt Sine1, but altering the sequence of classification functions to generate drifts: reversed SINE2, SINE2, reversed SINE1 and SINE1. (3) Gradual Sine1: again composed by the sequence of functions: SINE1, reversed SINE1, SINE2, reversed SINE2. It has 3 gradual drifts of duration 500 time steps at 5, 000, 10, 000, and 15, 000. (4) Gradual Sine2: similar to Gradual Sine1, but the sequence of functions is reversed SINE2, SINE2, reversed SINE1 and SINE1. (5) Abrupt RT: it is ruled by a classification function based on a random tree that splits features at random and sets labels to its leaves. It has 3 abrupt drifts at time steps 5, 000, 10, 000, and 15, 000. (6) Gradual RT: analogous to Abrupt RT, but with 3 gradual drifts of duration 500 at time steps 5, 000, 10, 000, and 15, 000.

Two versions of CA have been used in the performance benchmark: CURIE2×10 where $\mathcal{G} = 10$; and CURIE2x20 where $\mathcal{G} = 20$) have been tested with synthetic datasets. According to Fawcett T. (Data mining with cellular automata, ACM SIGKDD Explorations Newsletter 10, 1 (2008), 32-39), we have assigned one grid dimension to each feature of the dataset at hand. We also note that we have used a reduced number of instances to warm up the CA. The number of instances for this purpose usually depends on the memory or processing time restrictions. In our experiments we have considered a very low number of them in order to simulate a very restrictive real-time environment. In all of them, the CA has been configured with a von Neumann's neighborhood rather than opting for its Moore alternative. A von Neumann's neighborhood is linear in the number of dimensions of the instance space, and therefore scales well for problems of high dimensionality. In addition, a Moore's neighborhood includes more neighbors, thus we would have to apply the local rule over more cells, which would make the process computationally heavier and less suited for a DSM setting.

Regarding the classification accuracy, we have adopted the so-called prequential accuracy (pACC) (Dawid A. P. et al., Prequential probability: Principles and properties. Bernouilli 5, 1 (1999), 125-162), which is widely applied in streaming classification scenarios. In order to analyze the concept drift identifications we have used several detection metrics based on true positives (TP), false positives (FP), true negatives (TN), and false negatives (FN).

Table 1 presents the results of the proposed CA schemes for the synthetic datasets. First of all, we analyze the drift detection metrics results in the synthetics datasets, and concretely the cases in which the drift is abrupt. In Abrupt Sine1, CURIE2x10 obtains 13.67 and CURIE2×20 obtains 53.67. In Abrupt Sine2, CURIE2×10 obtains the best score with 17.33, whileCURIE2×20 does not show a good performance. In Abrupt RT, CURIE2×20 obtains the best score with 78.67, while CURIE2×10 is also good. In terms of precision, CURIE is very competitive, with the exception of CURIE2×10 that scores 0.046 for Abrupt RT. Finally we analyze MCC, observing that CURIE2x20 is the best for Abrupt RT. In the case of gradual datasets, in terms of $\mu$D, CURIE2×10 scores 343 for Gradual Sine1 and 578 for Gradual RT. In terms of precision, while CURIE2×10 shows bad scores for Gradual Sine1 and Gradual RT (but it is good for Gradual Sine2). Regarding the recall metric, CURIE2x20 does not perform well in all gradual datasets, but on the contrary CURIE2x10 performs very good. Finally, analyzing MCC, CURIE2×10 shows bad scores for Gradual Sine1 and Gradual RT (but it is good for Gradual Sine2), and CURIE2x20 shows good scores.

In general, we can state that the proposed CA has excellent results in terms of accuracy performance. Its detection metrics show varying performance depending on the type of drift and the parameter $\mathcal{G}$. For abrupt drifts, the proposed CA is very good. For gradual drifts, however, the performance of the approach depends on the metric or the value of $\mathcal{G}$.

TABLE 1: Accuracy and detection metrics for the synthetic datasets

| CA | preACC | TP | FP | TN | FN | $\mu$D | Precision | Recall | MCC |
|---|---|---|---|---|---|---|---|---|---|
| CURIE 2x10 | 0.931 | 3 | 2 | 19985 | 0 | 13.67 | 0.60 | 1.00 | 0.77 |
| **CURIE 2x20** | **0.928** | **3** | **0** | **19987** | **0** | **53.6 7** | **1.00** | **1.0 0** | **1.00** |

(a) Abrupt Sine1 dataset

| CA | preACC | TP | FP | TN | FN | $\mu$D | Precision | Recall | MCC |
|---|---|---|---|---|---|---|---|---|---|
| CURIE 2x10 | 0.887 | 3 | 21 | 19966 | 0 | 343.00 | 0.13 | 1.00 | 0.35 |

(continued)

| CA | preACC | TP | FP | TN | FN | $\mu$D | Precision | Recall | MCC |
|---|---|---|---|---|---|---|---|---|---|
| **CURIE 2x20** | **0.926** | **2** | **1** | **19987** | **1** | **1445.00** | **0.67** | **0.67** | **0.67** |

(b) Gradual Sine1 dataset

| CA | preACC | TP | FP | TN | FN | $\mu$D | Precision | Recall | MCC |
|---|---|---|---|---|---|---|---|---|---|
| CURIE 2x10 | 0.928 | 3 | 0 | 19987 | 0 | 17.33 | 1.00 | 1.00 | 1.00 |
| **CURIE 2x20** | **0.933** | **1** | **0** | **19989** | **2** | **159.00** | **1.00** | **0.33** | **0.58** |

c) Abrupt Sine2 dataset

| CA | preACC | TP | FP | TN | FN | $\mu$D | Precision | Recall | MCC |
|---|---|---|---|---|---|---|---|---|---|
| CURIE 2x10 | 0.888 | 2 | 0 | 19988 | 1 | 594.00 | 1.00 | 0.67 | 0.82 |
| **CURIE 2x20** | **0.92** | **1** | **0** | **19989** | **2** | **844.0 0** | **1.00** | **0.33** | **0.58** |

(d) Gradual Sine2 dataset

| CA | preACC | TP | FP | TN | FN | $\mu$D | Precision | Recall | MCC |
|---|---|---|---|---|---|---|---|---|---|
| CURIE 2x10 | 0.811 | 3 | 62 | 19925 | 0 | 196.67 | 0.05 | 1.00 | 0.21 |
| **CURIE 2x20** | **0.875** | **3** | **1** | **19986** | **0** | **78.67** | **0.75** | **1.00** | **0.87** |

e) Abrupt RT dataset

| CA | preACC | TP | FP | TN | FN | $\mu$D | Precision | Recall | II MCC |
|---|---|---|---|---|---|---|---|---|---|
| CURIE 2x10 | 0.796 | 3 | 85 | 19902 | 0 | 578.00 | 0.03 | 1.00 | 0.18 |
| **CURIE 2x20** | **0.867** | **1** | **1** | **19988** | **2** | **2057.00** | **0.50** | **0.33** | **0.41** |

f) Gradual RT dataset

With respect to conventional drift detectors, such as the one disclosed by Jesús L. Lobo et al in LUNAR: Cellular Automata for Drifting Data Streams, Information Sciences, Volume 543, 8 January 2021, Pages 467-487, which was used as external drift detector to trigger a drift adaptation mechanism in a CA, the method of the present invention has used an innovative drift detection mechanism within the algorithm of a CA itself. The proposed drift detection mechanism relies on the fact that a recent number of mutations in the neighbourhood of a cell that has just mutated may serve as a symptomatic indicator of the occurrence of a drift. Thus, the neighbourhood rule of the CA is utilized to detect possible distribution changes over the stream. Based on this fact, drifts in a data stream are efficiently identified. With the proposed method, a maximum detection performance score is obtained using minimum time and low memory at the same time.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

**Claims**

1. A computer-implemented method for making a prediction and detecting drift in a data stream, the method comprising:

providing a processing means (120) with at least one stream of data comprising a sequence of data instances $D_{0,t} = d_0, ..., d_t$ representing a demand or use of a service or activity in at least one point in a network (10), wherein $d_t = (\mathbf{x}_t, y_i)$ is a data instance captured at time t, $\mathbf{x}_t$ is a feature vector and $y_t$ its label, wherein label $y_t$ denotes whether there is an increase or decrease in the demand or use of the service or activity;

at the processing means (120) having an embedded cellular automaton (121) defined by the following parameters: (i) lattice formed by a grid of cells, the grid having grid size G, the cells in the lattice being filled with the data instances of the stream of data $D_{0,t}$; (ii) states assigned to said cells, wherein said states assigned to each cell indicate either an increase or a decrease in the service demand as denoted by the labels $y_i$; (iii) a neighbourhood defined by a radius *r*, and (iv) at least one local rule, the neighbourhood being used to evaluate the at least one local rule:

initializing the grid using a set of P preparatory data instances $[(X_t, y_t)]_{t=0}^{t=P-1}$ ; every time a new data instance $d_t$ of a data stream $[(X_t, y_t)]_{t=P}^{t=\infty}$ arrives:

>predicting the label $y_t$ of the incoming instance,
>using said label for updating the state of the corresponding cell;
>checking whether a mutation of a cell state has occurred by comparing the previous state of the cell with the label of the incoming instance and, if a mutation is detected in the cell state:
>
>>checking the state of the neighbouring cells in a certain radius $r_{mut}$ in a specific period of time, and if the number of neighbouring mutants exceeds a threshold of allowed mutants, determining that a drift has occurred.

2. The method of claim 1, wherein the label $y_t$ of the incoming instance is predicted by observing in which cell of the grid are the values of the incoming instance $X_t$, and taking as prediction the state of that cell S(c).

3. The method of either claim 1 or 2, wherein when it is determined that a drift has occurred, the cellular automaton (121) is adapted (122) to the detected change in the stream distribution.

4. The method of claim 3, wherein when a drift has occurred, the cellular automaton (121) is adapted to the detected change in the stream distribution by resetting the grid, the vector states and the vector of time steps in which a mutation was present, and initializing the grid by seeding it with the instances stored in a sliding window of w past instances.

5. The method of any one of claims 1-4, further comprising, in view of the prediction of label $y_t$ of the incoming instance, performing an action, on one or more points in the network (10).

6. The method of any one of claims 1-5, wherein said data instances correspond to one of the following stream data sources: the energy consumption of a certain home or business, traffic flow measurements in a road, data from an industrial machine, readings of a sensor, web page requests, messages posted by a user of a social network telephone conversation traffic, clicks on marketing data by a user of an electronic device, ATM transactions, web searches and electricity, gas and water consumption traces.

7. The method of any one of claims 1-7, wherein drift in the data stream represents one of the following: non-technical losses in a consumption network, changes in the road network, seasonality, or changes in humidity or temperature.

8. A device (150) for making a prediction and detecting drift in a data stream, comprising:

>means (115) for providing at least one stream of data comprising a sequence of data instances $D_{0,t} = d_0, ..., d_t$ representing a demand or use of a service or activity in at least one point in a network (10), wherein $d_t = (x_t, y_i)$ is a data instance captured at time t, $x_t$ is a feature vector and $y_t$ its label, wherein label $y_t$ denotes whether there is an increase or decrease in the demand or use of the service or activity;
>processing means (120) having an embedded cellular automaton (121) defined by the following parameters: (i) lattice formed by a grid of elements or cells, the grid having grid size $G$, the cells in the lattice being filled with the data instances of the stream of data $D_{0,t}$ ; (ii) states assigned to said cells, wherein said states assigned to each cell indicate either an increase or a decrease in the service demand as denoted by the labels $y_i$; (iii) a neighbourhood defined by a radius $r$, and (iv) at least one local rule; wherein the neighbourhood is used to evaluate the at least one local rule; wherein the lattice is formed by the at least one stream of data $D_{0,t}$; wherein the processing means (120) is configured for:

initializing the grid using a set of P preparatory data instances $[(X_t, y_t)]_{t=0}^{t=P-1}$ ; every time a new data instance $d_t$ of a data stream $[(X_t, y_t)]_{t=P}^{t=\infty}$ arrives:

predicting the label $y_t$ of the incoming instance,
using said label for updating the state of the corresponding cell;
checking whether a mutation of a cell state has occurred by comparing the previous state of the cell with the label of the incoming instance and, if a mutation is detected in the cell state:

checking the state of the neighbouring cells in a certain radius $r_{mut}$ in a specific period of time, and if the number of neighbouring mutants exceeds a threshold of allowed mutants, determining that a drift has occurred.

9. The device of claim 8, wherein the processing means (120) is configured to, when it is determined that a drift has occurred, adapt the cellular automaton (121) to the detected change in the stream distribution.

10. The device of claim 9, wherein the processing means (120) is configured to, when a drift has occurred, adapt the cellular automaton (121) to the detected change in the stream distribution by resetting the grid, the vector states and the vector of time steps in which a mutation was present, and initialize the grid by seeding it with the instances stored in a sliding window of w past instances.

11. The device of any one of claims 8-10, wherein said data instances representing a service demand correspond to one of the following stream data sources: readings of a sensor, web page requests, messages posted by a user of a social network telephone conversation traffic, clicks on marketing data by a user of an electronic device, ATM transactions, web searches and electricity, gas and water consumption traces.

12. The device (150) of any one of claims 8-11, further comprising a data communications module (130) configured to send data instances captured by a meter (105) associated to the device (150) and to receive data instances from other devices.

13. A computer program product comprising computer program instructions/code for performing the method according to any one of claims 1-7.

14. A computer-readable memory/medium that stores program instructions/code for performing the method according to any one of claims 1-7.

**FIG. 1**

EP 4 027 277 A1

STREAMING CELLULAR AUTOMATA

**FIG. 2**

**FIG. 3**

EP 4 027 277 A1

**FIG. 4**

EP 4 027 277 A1

Europäisches
Patentamt

European
Patent Office

Office européen
des brevets

## EUROPEAN SEARCH REPORT

**Application Number**

EP 21 38 2004

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Lobo Jesus L ET AL: "CURIE: A Cellular Automaton for Concept Drift Detection", , 21 September 2020 (2020-09-21), XP055816036, Retrieved from the Internet: URL:https://arxiv.org/pdf/2009.09677.pdf [retrieved on 2021-06-21] * Algorithm 1 * * figure 2 * * sections 1 and 4 * | 1-14 | INV. G06N20/00 G06N5/04 |
| A | CN 108 170 695 A (UNIV XINYANG NORMAL) 15 June 2018 (2018-06-15) * paragraph [0007] - paragraph [0017] * | 1-14 | |
| A | CN 111 797 122 A (UNIV ZHEJIANG) 20 October 2020 (2020-10-20) * paragraph [0003] - paragraph [0050] * | 1-14 | |
| A | US 2020/285997 A1 (BHATTACHARYYA BHASKAR [US] ET AL) 10 September 2020 (2020-09-10) * paragraph [0504] - paragraph [0506] * | 1-14 | **TECHNICAL FIELDS SEARCHED (IPC)** G06N |

The present search report has been drawn up for all claims

| Place of search | Date of completion of the search | Examiner |
|---|---|---|
| Munich | 22 June 2021 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 38 2004

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2021

| Patent document cited in search report | | Publication date | Patent family member(s) | | Publication date |
|---|---|---|---|---|---|
| CN 108170695 | A | 15-06-2018 | NONE | | |
| CN 111797122 | A | 20-10-2020 | NONE | | |
| US 2020285997 | A1 | 10-09-2020 | US 2020285997 A1 | | 10-09-2020 |
| | | | WO 2020180887 A1 | | 10-09-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. I. WEBB et al.** *Characterizing concept drift. Data Mining and Knowledge Discovery,* 2016, vol. 30 (4), 964-994
- **JIE LU et al.** Learning under concept drift: A review. *IEEE Transactions on Knowledge and Data Engineering,* 2018
- **HANQING HU et al.** No Free Lunch Theorem for concept drift detection in streaming data classification: A review. *Wiley Interdisciplinary Reviews: Data Mining and Knowledge Discovery,* 2019, e1327
- **ROBERTO SOUTO MAIOR BARROS et al.** A large-scale comparison of concept drift detectors. *Information Sciences,* 2018, vol. 451, 348-370
- **ZHE YANG et al.** A novel concept drift detection method for incremental learning in nonstationary environments. *IEEE transactions on neural networks and learning systems,* 2019
- **JESÚS L. LOBO et al.** LUNAR: Cellular Automata for Drifting Data Streams. *Information Sciences,* 08 January 2021, vol. 543, 467-487
- **KARI, J.** Theory of cellular automata: A survey. *Theoretical Computer Science,* 2005, vol. 334, 3-33
- **JOAO GAMA et al.** A survey on concept drift adaptation. *ACM computing surveys (CSUR),* 2014, vol. 46 (4), 44
- **MONTIEL J. et al.** Scikit-multiplow: a multi-output streaming framework. *The Journal of Machine Learning Research,* 2018, vol. 19 (1), 2915-2914
- **FAWCETT T.** Data mining with cellular automata. *ACM SIGKDD Explorations Newsletter,* 2008, vol. 10 (1), 32-39
- **DAWID A. P. et al.** Prequential probability: Principles and properties. *Bernouilli,* 1999, vol. 5 (1), 125-162